# EUROPÄISCHE PATENTSCHRIFT

(11) **EP 3 010 781 B1**
(45) Veröffentlichungstag und Bekanntmachung des Hinweises auf die Patenterteilung: **20.12.2017**
(21) Anmeldenummer: 14731617.8
(22) Anmeldetag: 18.06.2014
(51) Int. Cl.: B62D 3/12

(54) **SPIELAUSGLEICH FÜR EINE RITZELLAGERUNG**
PLAY COMPENSATION FOR A PINION BEARING
COMPENSATION DE JEU POUR UN PALIER DE PIGNON

(30) Priorität: 21.06.2013 DE 102013010361
(43) Veröffentlichungstag der Anmeldung: 27.04.2016
(73) Patentinhaber: ThyssenKrupp Presta AG, 9492 Eschen (LI)
(72) Erfinder: MAIER, Aksel, 73655 Plüderhausen (DE); VOHWINKEL, Kai, 73262 Reichenbach (DE); GOLDBERG, Christine, 73779 Deizisau (DE); SCHRÖDER, Anatoli, 71636 Ludwigsburg (DE)
(74) Vertreter: thyssenkrupp Intellectual Property GmbH
(86) Internationale Anmeldenummer: PCT/EP2014/062810
(87) Internationale Veröffentlichungsnummer: WO 2014/202656

(56) Entgegenhaltungen:
- EP-A1- 1 065 132
- EP-A1- 2 497 975
- WO-A1-2004/067357
- WO-A1-2005/070745
- DE-A1-102009 014 671
- JP-A- 2010 116 090
- US-A1- 2008 217 094

## Beschreibung

Die vorliegende Erfindung betrifft ein Zahnstangenlenkgetriebe nach dem Oberbegriff des Anspruchs 1.

Derartige Zahnstangenlenkungen sind aus dem Stand der Technik seit längerem vorbekannt. Bei diesen Lenkungen wird die Zahnstange in Längsrichtung verschiebbar in einem Lenkgehäuse geführt. Ein in dem Lenkgehäuse drehbar gelagertes Ritzel greift in die Verzahnung der Zahnstange ein und bewirkt bei Drehung der mit dem Ritzel drehfest verbundenen Lenksäule die seitliche Verlagerung der Zahnstange, die wiederum über Spurstangen und Achsschenkel zu einer Verschwenkung der gelenkten Räder des Kraftfahrzeuges führt.

Der Eingriff der Verzahnung zwischen dem Ritzel und der Zahnstange soll möglichst spielfrei sein, insbesondere weil bei Geradeausfahrt oder Umkehr der Lastrichtung im Verzahnungseingriff ansonsten Geräusche entstehen.

Auch für das Fahrverhalten eines Kraftfahrzeugs ist Lenkungsspiel nachteilig. Um einen spielfreien Eingriff zu erreichen, wird die Zahnstange üblicherweise von einem federbelasteten Druckstück gegen das Ritzel gedrängt. Das Druckstück selbst liegt an der der Verzahnung abgewandten Oberfläche der Zahnstange an und sitzt in einer im Allgemeinen zylindrischen Bohrung des Lenkungsgehäuses. Beispiele für bekannte Druckmechanismen sind zum Beispiel in den europäischen Patentanmeldungen EP 0 758 605 A1 und EP 0 860 345 A3 angegeben.

Druckstücke sind in der Fertigung und der Montage aufwändig. Es ist ein separater Stutzen an dem Lenkungsgehäuse erforderlich. Das Druckstück muss mit einer Feder und einer Einstellschraube sowie einer Kontermutter zur Festlegung der Einstellschraube versehen sein. Es muss in der Form sehr genau der Zahnstange und dem Stutzen angepasst sein. Weiter muss das Druckstück geschmiert und eingestellt werden. Dies ist ein erheblicher Aufwand, der auch zu den Kosten einer solchen Lenkung beiträgt. Dennoch werden nahezu alle Zahnstangenlenkungen derzeit mit einem Druckstück versehen.

Eine andere technische Lösung ohne Druckstück ist aus der DE 10 2009 014 671 A1 bekannt. Dort ist ein exzentrisches Gleitlager der Zahnstange vorgesehen, welches gegenüber dem Lenkungsgehäuse drehbar ist, so dass die Zahnstange in Richtung auf das Lenkritzel zustellbar ist. So kann während der Montage des Lenkgetriebes die Zahnstange durch Drehung des Lagers auf das Ritzel zugestellt werden, so dass das Spiel in diesem Verzahnungseingriff einstellbar ist. Nachteil dieser technischen Lösung ist, dass die Einstellung des Spiels zwar möglich ist, aber keine elastische, bei Last nachgebende Vorspannung erzeugt wird.

Aus der EP 1 065 132 A1 ist eine Lageranordnung bekannt, bei der mittels eines das Lager umgebenden, in einem Führungsstück geführten Schiebestücks eine Vorspannung zwischen Ritzel und Zahnstange einstellbar ist. Nachteilig ist jedoch, dass dass Schiebestück in dem Führungsstück verdrehbar und dadurch nicht sicher orientierbar ist, wodurch die Vorspannung beeinträchtigt werden kann.

Es ist deshalb Aufgabe der vorliegenden Erfindung, eine Zahnstangenlenkung ohne Druckstück der eingangs genannten Bauart dahingehend zu verbessern, dass ein spielfreier Eingriff zwischen dem Ritzel und der Zahnstange mit elastischer Vorspannung erzielt werden kann, wobei die Führung zwischen Führungsstück und Schiebestück verbessert ist.

Diese Aufgabe wird durch ein Zahnstangenlenkgetriebe mit den Merkmalen des Anspruchs 1 gelöst.

Danach ist ein Zahnstangenlenkgetriebe mit einem Lenkungsgehäuse ohne Druckstückstutzen vorgesehen, wobei in dem Lenkungsgehäuse eine Zahnstange verschiebbar gelagert ist, und mit einem Ritzel, das in einem Lager in einem Gehäuse, aufweisend eine Längsachse, drehbar gelagert ist und das eine Ritzelverzahnung aufweist, die mit einer Verzahnung der Zahnstange in Eingriff steht, bei dem eine Lageranordnung das Lager des Ritzels in dem Gehäuse lagert, wobei die Lageranordnung ein in Anlage an das Gehäuse angeordnetes Führungsstück mit innenliegender Führungsfläche und ein das Lager umgebendes Schiebestück mit außenliegender Führungsfläche aufweist, wobei das Schiebestück in Richtung der Längsachse des Gehäuses durch die Führungsflächen verschiebbar geführt ist, so dass das Ritzel in Richtung auf die Zahnstange zustellbar ist, wobei die Führungsflächen durch zwei gotische Halbbögen beschrieben sind.

Dadurch, dass die Führungsflächen durch zwei so genannte "gotische Halbbögen" beschrieben sind. Diese Art der Ausführung bildet eine Führungsschiene und somit eine zusätzliche Verdrehsicherung zwischen dem Führungsstück und dem Schiebestück.

Dabei ist es besonders vorteilhaft, wenn die Lageranordnung in Längsrichtung elastisch vorgespannt ist. Durch die Vorspannung gibt die Lageranordnung bei Last nach und kann so Ungenauigkeiten der Verzahnung oder Stöße, zum Beispiel erzeugt durch Unebenheiten der Fahrbahn aufnehmen.

Weiterhin ist es bevorzugt vorgesehen, dass die Führungsflächen gleitoptimiert ausgebildet sind, so dass keine Selbsthemmung entsteht.

Dabei stehen im gebrauchsfähigen Zustand die Führungsflächen in Anlage mit einander.

In einer bevorzugten Ausführungsform sind die Führungsflächen durch einen Teil eines schiefen kreisförmigen Zylinders beschrieben, dessen Achse gegenüber der Längsachse des Gehäuses zum Eingriff des Ritzels in die Zahnstange hin gekippt ist. So kann durch die Führung das Spiel des Eingriffs Ritzel/Zahnstange eingestellt werden.

Vorteilhafterweise ist die Lageranordnung durch ein Federelement in Längsrichtung vorgespannt.

Dabei ist das Federelement bevorzugt als Tellerfeder oder Schraubenfeder ausgebildet ist.

Um das Spiel des Eingriffs von der Ritzelverzahnung mit der Verzahnung der Zahnstange einzustellen ist, vorzugsweise eine Stellschraube vorgesehen.

Zum Ausgleich von in Folge der Spielnachstellung eventuell auftretenden Winkelfehlern kann vorgesehen sein, dass das Ritzel an seinem dem Lager abgewandten Ende in einem als Pendellager, Schwenklager, Kugellager oder Pendelrollenlager ausgebildeten Wälzlager in einem kleinen Winkelbereich schwenkbar gelagert ist.

Zwei bevorzugte Ausführungsformen der Erfindung werden nachfolgend anhand der Zeichnungen näher erläutert. Es zeigen:
- Fig. 1:: einen Längsschnitt einer erfindungsgemäßen Lageranordnung eines Ritzels einer Zahnstangenlenkung,
- Fig. 2:: eine perspektivische Ansicht der erfindungsgemäßen Lageranordnung aus Fig. 1 ohne Darstellung des Ritzels,
- Fig. 3:: eine perspektivische Ansicht von Einzelteilen der Lageranordnung aus Fig. 1 und Fig. 2,
- Fig. 4:: einen Querschnitt der erfindungsgemäße Lageranordnung, sowie
- Fig. 5:: einen Querschnitt einer weiteren erfindungsgemäßen Lageranordnung.

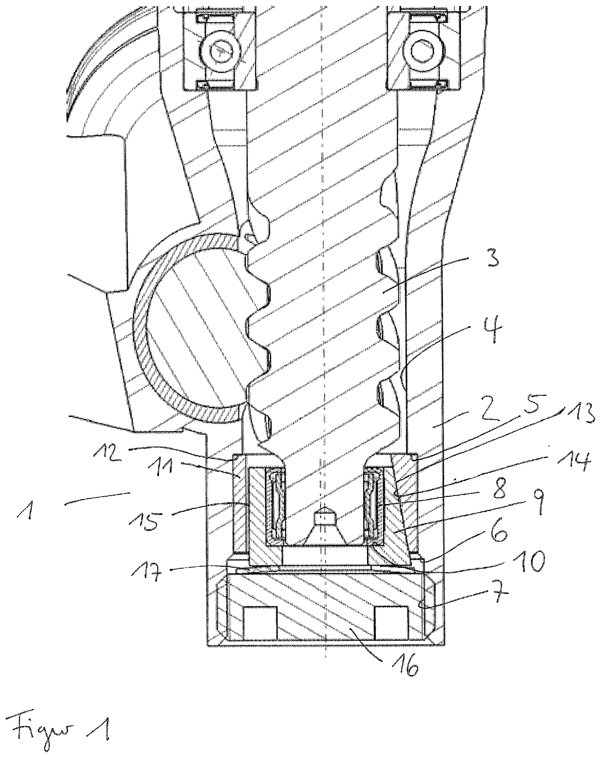

In der Fig. 1 ist eine erfindungsgemäße Lageranordnung 1 an einem freien Ende eines in einem Gehäuse 2 gelagerten Ritzels 3 dargestellt. Das Ritzel 3 greift in die Verzahnung einer Zahnstange spielfrei ein und bewirkt bei Drehung des mit dem Ritzel drehfest verbundenen Antriebs zum Beispiel der Lenksäule oder eines Elektromotors die seitliche Verlagerung der Zahnstange, die wiederum über Spurstangen und Achsschenkel zu einer Verschwenkung der gelenkten Räder des Kraftfahrzeuges führt.

Das Gehäuse 2 weist eine konzentrisch durchsetzende Ausnehmung 4 entlang der Längsachse des Gehäuses auf, die an ihrem antriebsfernen Ende einen ersten Absatz 5 und einen zweiten Absatz 6 aufweist, an denen ein innenliegendes Gewinde 7 anschließt. In der Ausnehmung 4 des Gehäuses 2 ist das Ritzel 3 längs angeordnet und an seinem antriebsfernen Ende in einem Nagellager 8 drehbar gelagert. Das zylindrische Nagellager 8 umgibt das antriebsferne Ende des Ritzels 3 konzentrisch. Das Nadellager 8 wiederum wird von einer ersten Hülse 9 in Anlage umgeben und sitzt dort in einem Lagersitz. Die Höhe der ersten Hülse 9 ist größer als die Höhe des Nadellagers 8 und die erste Hülse 9 ist so angeordnet, dass sie das zylindrische Nadellager 8 an der antriebsnahen und antriebsfernen Stirnseite überragt. Dabei weist die erste Hülse 9 an der antriebsfernen Stirnseite einen radial nach innen gerichteten Vorsprung 10 auf, mit dem das Nadellager 8 an seiner antriebsfernen Stirnseite in Anlage steht. Die erste Hülse 9 wird weiterhin von einer zweiten Hülse 11 umgeben, wobei die Höhen der beiden Hülsen 9, 11 annähernd gleich dimensioniert sind. Die zweite Hülse 11 ist dabei so angeordnet, dass sie mit einer antriebsnahen Stirnseite an einem Ringbund 12 des ersten Absatzes 5 der Ausnehmung 4 des Gehäuses 3 anliegt und diesen radial nach innen überragt und umfangseitig mit der Innenseite der Ausnehmung 4 des Gehäuses 3 drehfest in Anlage zwischen dem ersten Absatz 5 und zweiten Absatz 6 steht. Die zweite Hülse 11 kann bei der Montage aufgrund der stufenförmigen Ausnehmung 4 des Gehäuses 3 vom antriebsfernen Ende aufgenommen werden und bis zu dem Ringbund 12 eingeschoben werden. So wird ein fester Sitz der zweiten Hülse 11 in axialer Richtung gewährleistet. Drehfestigkeit kann zum Beispiel durch das Zusammenspiel einer hier nicht gezeigten Nase der zweiten Hülse 11 mit einem entsprechenden Ausschnitt der Innenseite der Ausnehmung 4 des Gehäuses 3 erreicht werden.

Die beiden Hülsen 9, 11 stehen miteinander im Eingriff, dabei dient die zweite Hülse 11 als Führungsstück, welches die erste Hülse 9, das Schiebestück, axial verschiebbar führt.

Zur axialen Verschiebung weisen die Hülsen 9, 11 parallele Führungsflächen 13, 14, die bei der ersten Hülse 9 auf der Außenseite und bei der zweiten Hülse 11 auf der Innenseite angeordnet sind, und einen gegenüber den Führungsflächen 13, 14 zwischen den Hülsen 9, 11 liegenden Spalt 15 auf.

In antriebsferner Richtung schließt sich an die zweite Hülse 11 der zweite Absatz 6 der Ausnehmung 4 an, der einen größeren Durchmesser aufweist. Dieser zweite Absatz 6 dient als Anschlag für eine Stellschraube 16, die in das Gewinde 7 des Gehäuses 4 eingeschraubt ist. Des Weiteren ist zwischen der Stellschraube 16 und der ersten Hülse 9 ein Federelement 17 vorgesehen. Die Größe des Federelements 17 ist dabei so gewählt, dass die antriebsferne Stirnseite der ersten Hülse 9 in Anlage mit dem Federelement 17 steht und das Federelement 17 die erste Hülse 9 in radialer Richtung nach außen überragt. Das Federelement 17 kann, wie in Figur 1 dargestellt, als Tellerfeder oder alternativ auch als Schraubenfeder ausgebildet sein.

Mittels des Federelements 16, das sich an der Stellschraube 16 abstützt, wird die erste Hülse 9 mit einer axialen Kraft beaufschlagt. Die dadurch bewirkte axiale Verschiebung der ersten Hülse 9 gegenüber der zweiten Hülse 11 entlang der Führungsflächen 13, 14 führt dazu, dass das Ritzel 3 senkrecht zur Längsrichtung verlagert wird, wodurch das Ritzel 3 auf die Zahnstange gedrückt wird. Das Spiel der Verzahnung von Ritzel 3 und Zahnstange kann somit über die Stellschraube 16 eingestellt werden.

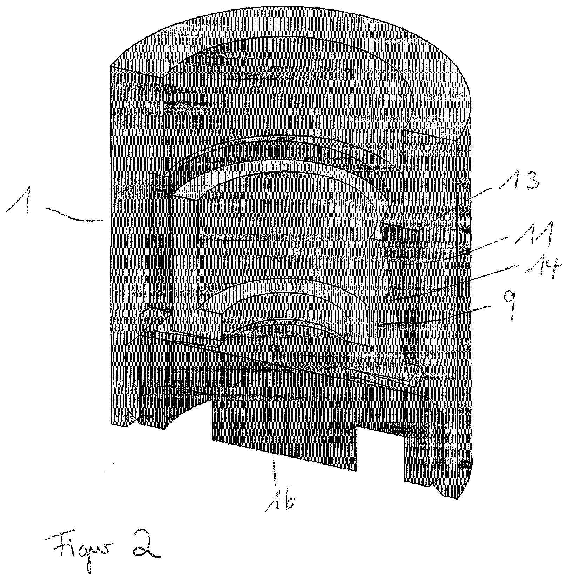

In der Figur 2 ist die Lageranordnung 1 ohne Ritzel und ohne Nagellager gezeigt. Das Zusammenspiel der ersten Hülse 9 mit der zweiten Hülse 11 ist deutlich zu erkennen. Die Führungsflächen 13, 14 der beiden Hülsen 9, 11 bilden eine Führung, die die Bewegungsrichtung der ersten Hülse 9 gegenüber der zweiten Hülse 11 vorgibt. Die aneinander liegenden Führungsflächen 13, 14 der Hülsen 9, 11 sind dabei so gleitoptimiert, dass keine Selbsthemmung entsteht. So kann die Lageranordnung 1 zum Beispiel auch axiale Stöße des hier nicht dargestellten Ritzels gegen die Federkraft des Federelements 17 abfedern ohne zu klemmen, wobei nach dem Stoß durch Rückstellung des Federelements 17 die Ausgangslage der Lageranordnung 1 wieder eingenommen wird.

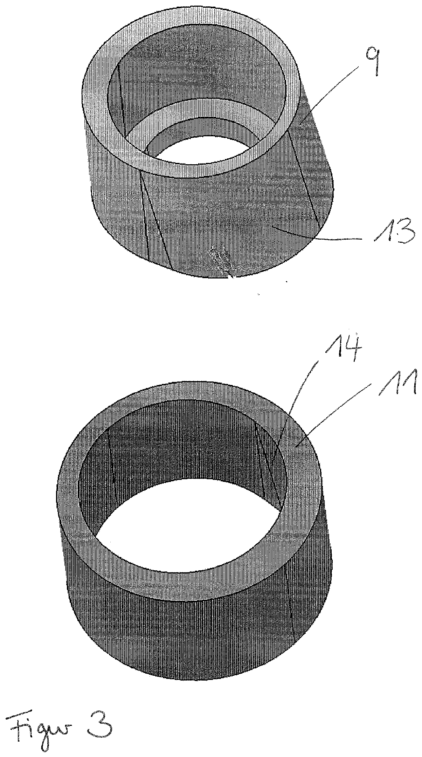

Die Formgebung der beiden Hülsen 9, 11 ist in Figur 3 gezeigt. Die erste Hülse 9 und die zweite Hülse 11 weisen über etwa 180° ihres Umfangs eine gerade kreiszylindrische Form auf, wobei der Innenradius der zweiten Hülse 11 größer ist als der Außenradius der ersten Hülse 9, so dass sich ein Spiel ergibt. Dieses Spiel in Form des Spalts 15 erlaubt die Verlagerung des Ritzels senkrecht zur Längsachse bzw. die axiale Verschiebung der ersten Hülse 9 gegenüber der zweiten Hülse 11. Des Weiteren weist die Außenseite der ersten Hülse 9 die erste Führungsfläche 13 und die Innenseite der zweiten Hülse 11 die zweite Führungsfläche 14 auf. In dem Bereich der Führungsflächen 13, 14 ist die Innenseite der ersten Hülse 9 und die Außenseite der zweiten Hülse 11 ebenfalls gerade kreiszylinderförmig ausgebildet. Hingegen sind die Außenseite der ersten Hülse 9 und die Innenseite der zweiten Hülse 11 schief kreiszylinderförmig ausgebildet, wobei die Achse gegenüber der Längsachse des Gehäuses in Richtung des Eingriffs zwischen Ritzel und Zahnstange verkippt ist. Die erste Führungsfläche 13 und die zweite Führungsfläche 14 sind dabei so aufeinander abgestimmt, dass sie in Anlage stehen.

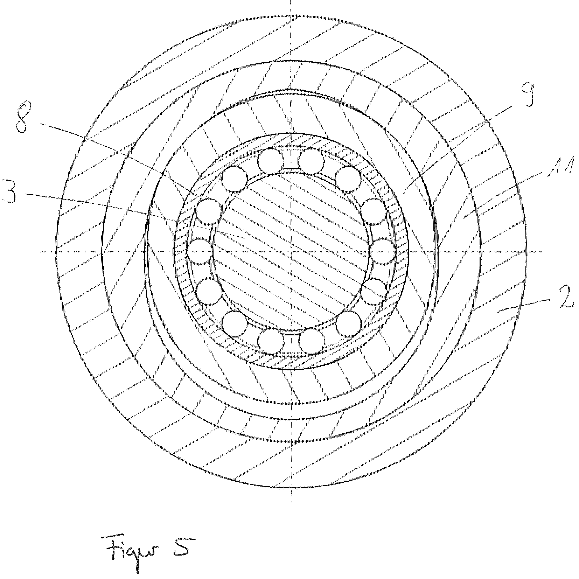

In weiteren Ausführungsformen können die Führungsflächen 13, 14 nahezu beliebig ausgebildet sein, wobei sie stets aufeinander so abgestimmt sind, dass keine Selbsthemmung der Führung auftritt. Zum Beispiel kann die Führung durch zwei gotische Halbbögen (siehe Fig. 5) beschrieben werden. Gotische Halbbögen haben den Vorteil, dass durch deren Konstruktion und das Zusammenspiel des Führungsstücks mit der geführten ersten Hülse eine Art Verdrehsicherung entsteht, die sicher stellt, dass die erste Hülse sich nicht gegenüber der zweiten Hülse in der Führung verdreht.

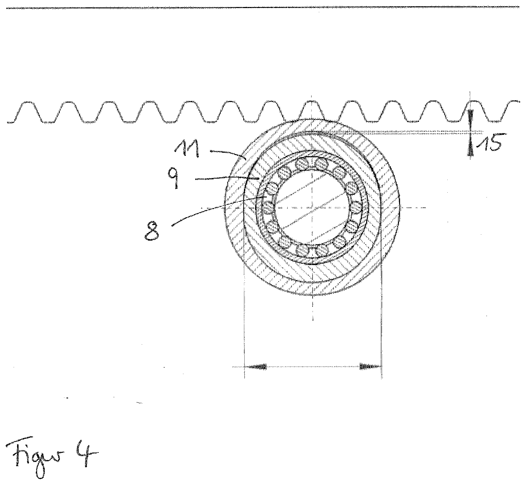

Die Figur 4 zeigt die Anordnung von erster Hülse 9, zweiter Hülse 11 und Nagellager 8 in einem Querschnitt. Das Nagellager 8 ist in die erste Hülse 9 in Anlage aufgenommen. Zwischen der ersten Hülse 9 und zweiten Hülse 11 ist der Spalt 15 zu erkennen, der die Bewegung der ersten Hülse 9 im Führungsstück erlaubt.

Vorzugsweise werden die beiden Hülsen 9, 11 als Sinterteil oder Spritzgussteil hergestellt.

Bei der Montage wird das Spiel mittels der Stellschraube eingestellt. Die Stellschraube übt eine axiale Kraft auf die erste Hülse, in der das Wälzlager des Ritzels sitzt, aus. Durch die in Richtung des Eingriffs zwischen Ritzel und Zahnstange geneigte Führung der ersten Hülse wird das Ritzel durch die axial beaufschlagte Kraft gegen die Zahnstange gedrängt, so dass der Eingriff spielfrei einstellbar ist. Im Betrieb nimmt die elastische Vorspannung der erfindungsgemäßen Lageranordnung Ungenauigkeiten der Verzahnung auf. Weiterhin kann das Ritzel den Stößen, zum Beispiel erzeugt durch Unebenheiten der Fahrbahn, ausweichen, wobei das Federelement für eine Rückstellung in den spielfreien Zustand sorgt. Zudem ist eine Lenkrichtungsumkehrung problemlos durchführbar.

Die erfindungsgemäße Lageranordnung erlaubt es, den Eingriff zwischen dem Ritzel und der Zahnstange ohne herkömmliches Druckstück mit einfachen und kostengünstigen Mitteln spielfrei mit elastischer Vorspannung zu erzielen.

## Patentansprüche

1. Zahnstangenlenkgetriebe mit einem Lenkungsgehäuse ohne Druckstückstutzen, wobei in dem Lenkungsgehäuse eine Zahnstange verschiebbar gelagert ist, und mit einem Ritzel (3), das in mindestens einem Lager (8) in einem Gehäuse (4), aufweisend eine Längsachse, drehbar gelagert ist und das eine Ritzelverzahnung aufweist, die mit einer Verzahnung der Zahnstange in Eingriff steht, wobei eine Lageranordnung (1) das Lager (8) des Ritzels (3) in dem Gehäuse (4) lagert,
**dadurch gekennzeichnet, dass** die Lageranordnung (1) ein in Anlage an das Gehäuse (4) angeordnetes Führungsstück (11) mit innenliegender Führungsfläche (14) und
ein das Lager (8) umgebendes Schiebestück (9) mit außenliegender Führungsfläche (13) aufweist,
wobei das Schiebestück (9) in Richtung der Längsachse des Ritzels durch die Führungsflächen (13, 14) verschiebbar geführt ist, so dass das Ritzel (3) in Richtung auf die Zahnstange zustellbar ist,
wobei die Führungsflächen (13, 14) durch zwei gotische Halbbögen beschrieben sind.

2. Zahnstangenlenkgetriebe nach Anspruch 1, **dadurch gekennzeichnet, dass** die Lageranordnung (1) in Längsrichtung elastisch vorgespannt ist.

3. Zahnstangenlenkgetriebe nach Anspruch 1 oder 2, **dadurch gekennzeichnet, dass** die Führungsflächen (13, 14) gleitoptimiert ausgebildet sind.

4. Zahnstangenlenkgetriebe nach einem der vorhergehenden Ansprüche, **dadurch gekennzeichnet, dass** die Führungsflächen (13, 14) im gebrauchsfähigen Zustand in Anlage stehen.

5. Zahnstangenlenkgetriebe nach einem der vorhergehenden Ansprüche, **dadurch gekennzeichnet, dass** die Führungsflächen (13, 14) durch einen Teil eines schiefen kreisförmigen Zylinders beschrieben sind, dessen Achse gegenüber der Längsachse des Gehäuses (4) zum Eingriff des Ritzels (3) in die Zahnstange hin gekippt ist.

6. Zahnstangenlenkgetriebe nach einem der vorhergehenden Ansprüche, **dadurch gekennzeichnet, dass** die Lageranordnung (1) durch ein Federelement (17) in Längsrichtung vorgespannt ist.

7. Zahnstangenlenkgetriebe nach Anspruch 6, **dadurch gekennzeichnet, dass** das Federelement (17) als Tellerfeder oder Schraubenfeder ausgebildet ist.

8. Zahnstangenlenkgetriebe nach einem der vorhergehenden Ansprüche, **dadurch gekennzeichnet, dass** das Spiel des Eingriffs von der Ritzelverzahnung mit der Verzahnung der Zahnstange mittels einer Stellschraube (16) einstellbar ist.

9. Zahnstangenlenkgetriebe nach einem der vorhergehenden Ansprüche, **dadurch gekennzeichnet, dass** das Ritzel (3) an seinem dem Lager (8) abgewandten Ende schwenkbar gelagert ist.

10. Zahnstangenlenkgetriebe nach Anspruch 9, **dadurch gekennzeichnet, dass** das Ritzel (3) an seinem dem Lager (8) abgewandten Ende in einem als Pendellager, Schwenklager, Kugellager oder Pendelrollenlager ausgebildeten Wälzlager gelagert ist.

## Claims

1. Rack and pinion drive having a steering housing without a thrust piece connector, wherein a toothed rack is slidably mounted in the steering housing, and having a pinion (3) which is rotatably mounted in at least one bearing (8) in a housing (4) having a longitudinal axis, and which pinion (3) has a pinion toothing arrangement which engages with a toothing arrangement of the toothed rack, wherein a bearing arrangement (1) mounts the bearing (8) of the pinion (3) in the housing (4),
**characterized in that** the bearing arrangement (1) has
a guide piece (11) which is arranged in abutment against the housing (4) and has an internal guide face (14), and
a sliding piece (9) which surrounds the bearing (8) and has an external guide face (13),
wherein the sliding piece (9) is guided so as to be slidable in the direction of the longitudinal axis of the pinion by means of the guide faces (13, 14), with the result that the pinion (3) can be adjusted in the direction of the toothed rack,
wherein the guide faces (13, 14) are described by two gothic arches.

2. Rack and pinion drive according to Claim 1, **characterized in that** the bearing arrangement (1) is elastically prestressed in the longitudinal direction.

3. Rack and pinion drive according to Claim 1 or 2, **characterized in that** the guide faces (13, 14) are embodied optimized in terms of sliding.

4. Rack and pinion drive according to one of the preceding claims, **characterized in that** in the usable state the guide faces (13, 14) are in abutment.

5. Rack and pinion drive according to one of the preceding claims, **characterized in that** the guide faces (13, 14) are described by a part of a tilted, circular cylinder whose axis is tilted with respect to the longitudinal axis of the housing (4) for engagement of the pinion (3) in the toothed rack.

6. Rack and pinion drive according to one of the preceding claims, **characterized in that** the bearing arrangement (1) is prestressed in the longitudinal direction by a spring element (17).

7. Rack and pinion drive according to Claim 6, **characterized in that** the spring element (17) is embodied as a disk spring or helical spring.

8. Rack and pinion drive according to one of the preceding claims, **characterized in that** the interplay of the engagement of the pinion toothing arrangement with the toothing arrangement of the toothed rack can be adjusted by means of an adjustment screw (16).

9. Rack and pinion drive according to one of the preceding claims, **characterized in that** the pinion (3) is pivotably mounted at its end facing away from the bearing (8).

10. Rack and pinion drive according to Claim 9, **characterized in that** the pinion (3) is mounted at its end facing away from the bearing (8) in a roller bearing which is embodied as a pendulum bearing, pivoting bearing, ball bearing or spherical roller bearing.

## Revendications

1. Mécanisme de direction à crémaillère comprenant un boîtier de direction sans raccord de pièce de pression, une crémaillère étant supportée de manière déplaçable dans le boîtier de direction, et comprenant un pignon (3) qui est supporté à rotation dans au moins un palier (8) dans un boîtier (4) présentant un axe longitudinal et qui présente une denture de pignon qui est en prise avec une denture de la crémaillère, un agencement de palier (1) supportant le palier (8) du pignon (3) dans le boîtier (4),
**caractérisé en ce que** l'agencement de palier (1) présente une pièce de guidage (11) disposée en appui contre le boîtier (4) avec une surface de guidage située à l'intérieur (14) et
une pièce coulissante (9) entourant le palier (8), avec une surface de guidage située à l'extérieur (13),
la pièce coulissante (9) étant guidée de manière déplaçable dans la direction de l'axe longitudinal du pignon par les surfaces de guidage (13, 14) de telle sorte que le pignon (3) puisse être avancé dans la direction de la crémaillère,
les surfaces de guidage (13, 14) étant décrites par deux demi-arches gothiques.

2. Mécanisme de direction à crémaillère selon la revendication 1, **caractérisé en ce que** l'agencement de palier (1) est précontraint élastiquement dans la direction longitudinale.

3. Mécanisme de direction à crémaillère selon la revendication 1 ou 2, **caractérisé en ce que** les surfaces de guidage (13, 14) sont réalisées de manière optimisée en termes de glissement.

4. Mécanisme de direction à crémaillère selon l'une quelconque des revendications précédentes, **caractérisé en ce que** les surfaces de guidage (13, 14) sont en appui dans l'état prêt à l'emploi.

5. Mécanisme de direction à crémaillère selon l'une quelconque des revendications précédentes, **caractérisé en ce que** les surfaces de guidage (13, 14) sont décrites par une partie d'un cylindre de forme circulaire oblique, dont l'axe est basculé par rapport à l'axe longitudinal du boîtier (4) pour l'engagement du pignon (3) dans la crémaillère.

6. Mécanisme de direction à crémaillère selon l'une quelconque des revendications précédentes, **caractérisé en ce que** l'agencement de palier (1) est précontraint dans la direction longitudinale par un élément de ressort (17).

7. Mécanisme de direction à crémaillère selon la revendication 6, **caractérisé en ce que** l'élément de ressort (17) est réalisé sous forme de ressort Belleville ou de ressort hélicoïdal.

8. Mécanisme de direction à crémaillère selon l'une quelconque des revendications précédentes, **caractérisé en ce que** le jeu de l'engagement de la denture de pignon avec la denture de la crémaillère peut être ajusté au moyen d'une vis de réglage (16).

9. Mécanisme de direction à crémaillère selon l'une quelconque des revendications précédentes, **caractérisé en ce que** le pignon (3) est supporté de manière pivotante au niveau de son extrémité opposée au palier (8).

10. Mécanisme de direction à crémaillère selon la revendication 9, **caractérisé en ce que** le pignon (3) est supporté au niveau de son extrémité opposée au palier (8) dans un palier à roulement réalisé sous forme de palier à rotule, de palier pivotant, de roulement à billes ou de roulement à rotule sur rouleaux.
